# EUROPÄISCHE PATENTSCHRIFT

(11) **EP 2 522 220 B1**
(45) Veröffentlichungstag und Bekanntmachung des Hinweises auf die Patenterteilung: **03.05.2017**
(21) Anmeldenummer: 12167498.0
(22) Anmeldetag: 10.05.2012
(51) Int. Cl.: A01K 15/00, A01L 13/00, A01L 15/00

(54) **Huf-und Klauenpflegestand**
Hoof and claw treating stall
Support pour traitement des sabots et des onglons

(30) Priorität: 12.05.2011 DE 202011100639 U
(43) Veröffentlichungstag der Anmeldung: 14.11.2012
(73) Patentinhaber: Wilken, Pascal, 26188 Edewecht (DE)
(72) Erfinder: Wilken, Pascal, 26188 Edewecht (DE)
(74) Vertreter: Siekmann, Gunnar

(56) Entgegenhaltungen:
- EP-A1- 1 457 110
- DE-U1- 29 609 730
- US-A- 4 201 157
- US-A- 4 214 555
- US-A1- 2007 017 455

## Beschreibung

Die Erfindung betrifft eine Vorrichtung zur Durchführung der Huf- und Klauenpflege bei Tieren mit einem Fahrwerk und einem auf dem Fahrwerk angeordneten Rahmen, der zumindest eine Standplattform für ein zu behandelndes Tier aufweist, wobei das Fahrwerk und der Rahmen über einen Kippmechanismus mit einander verbunden sind.

Die Hufe und Klauen von Tieren, wie insbesondere Rindern, bedürfen der regelmäßigen Pflege, welche unter anderem das Abschleifen der Klauen umfasst. Um die Tiere währenddessen sicher zu fixieren wurden für die Durchführung dieser Arbeiten spezielle Vorrichtungen entwickelt. Diese werden zum Teil vollhydraulisch betrieben und erleichtern die durchzuführenden Arbeiten erheblich. Mit der Durchführung der Huf- und Klauenpflege werden häufig spezialisierte Klauenpfleger beauftragt, die zumeist mit einer entsprechenden Vorrichtung ausgerüstet zu den jeweiligen landwirtschaftlichen Betrieben oder dergleichen fahren und dort die Arbeiten ausführen. Um einen Transport der Vorrichtungen in die Stallungen beziehungsweise zum jeweiligen Arbeitsplatz zu ermöglichen, ist diesen häufig ein einfaches Fahrwerk aus an den Rahmen montierten Rädern zugeordnet. Bei diesen Vorrichtungen kann zumeist eine Fahr- und eine Arbeitsposition unterschieden werden, wobei der Rahmen in der Arbeitsposition zusätzlich stabilisiert ist. Diese einfach ausgestalteten Fahrwerke sind jedoch kaum geeignet, eine sichere Querung von Hindernissen zu gewährleisten, da zum Beispiel schon Türschwellen nur schwer zu bewältigen sind, insbesondere, wenn die Vorrichtungen mit Muskelkraft gezogen werden müssen.

Die US 4,201,157 zeigt eine mobile Tierbehandlungsvorrichtung, die einen Rahmen aufweist, der einen Durchgang für Tiere ausbildet. An diesem Rahmen ist ein Fahrwerk mit wenigstens zwei Rädern angeordnet, die über schwenkbare Querachsen an dem Rahmen befestigt sind. Der Rahmen kann damit durch Verschwenken der Querachsen zwischen einer Fahrposition und einer Arbeitsposition angehoben und abgesenkt werden, wofür gemäß der US 4,201,157 hydraulische Einrichtungen vorgesehen sind.

Aufgabe der Erfindung ist es daher, eine Vorrichtung zur Huf- und Klauenpflege zu schaffen, mit der auf einfache Weise auch Hindernisse, wie zum Beispiel Türschwellen, überwunden werden können.

Die Lösung dieser Aufgabe erfolgt mit den Merkmalen des Schutzanspruchs 1. Weiterbildungen und vorteilhafte Ausgestaltungen der Erfindung sind in den Unteransprüchen angegeben.

Die Vorrichtung zur Durchführung der Huf- und Klauenpflege bei Tieren zeichnet sich erfindungsgemäß dadurch aus, dass dass der Rahmen in Fahrtrichtung nach hinten oder nach vorne kippbar ist, indem der Rahmen einseitig in einem vorderen oder einem hinteren Bereich anhebbar ist, dass das Fahrwerk als ein Raupenfahrwerk ausgebildet ist, dass der Rahmen einseitig mit dem anhebbaren Bereich über das Fahrwerk hinaus überhängt, und dass der angehobene Rahmen eine mindestens benötigte Bodenfreiheit aufweist, so dass ein sicheres Überqueren von zum Beispiel Türschwellen oder dergleichen ermöglicht ist. Mit dem Kippmechanismus ist ein sicheres Überqueren von zum Beispiel Türschwellen oder dergleichen ermöglicht. Dabei wird der Rahmen einseitig, dass heißt, in einem vorderen oder einem hinteren Bereich angehoben, um die mindestens benötigte Bodenfreiheit zu erreichen. Vorderer und hinterer Bereich beziehen sich dabei auf eine bevorzugte Fahrtrichtung. Der Rahmen hängt dann auch einseitig mit dem anhebbaren Bereich über das Fahrwerk hinaus über, ohne auf dem Boden zu schleifen beziehungsweise an einem zu überfahrenden Hindernis hängen zu bleiben. An dem dem angehobenen Bereich entgegengesetzten Ende, d. h. dem vorderen oder hinteren Bereich, ist der Rahmen vorteilhafterweise an das Fahrwerk angelenkt und um eine Achse schwenkbar, so dass der gesamte Rahmen zu dem an das Fahrwerk angelenkten Ende kippbar ist. Mit Vorteil ist die Gesamthöhe und auch der Schwerpunkt der Vorrichtung möglichst niedrig, da der Rahmen gekippt wird. Somit kann neben niedrigen Durchfahrtshöhen, beispielsweise von Stalltüren, auch eine hohe Stabilität beim Fahren der Vorrichtung gewährleistet werden.

Der Kippmechanismus weist dazu vorteilhafterweise mindestens einen Kippzylinder auf. Dieser Kippzylinder ist derart anzuordnen, dass der Rahmen in Fahrtrichtung nach hinten oder nach vorne gekippt wird. Beim Überfahren von Hindernissen ist somit immer ausreichend Bodenfreiheit, bei gleichzeitig reduzierter Höhe gewährleistet, insbesondere bei Schwellen oder dergleichen, wobei durch die Kippung des Rahmens auch die Stabilität erhöht ist, beispielsweise bei zu überwindenden Steigungen. In einer besonders bevorzugten Ausführung sind zwei Kippzylinder seitlich, im hinteren Bereich des Rahmens zwischen Fahrwerk und Rahmen vorgesehen. Die Betätigung des Kippmechanismus beziehungsweise des wenigstens einen Kippzylinders erfolgt vorteilhafterweise hydraulisch, so dass ein zumeist schon vorhandenes Hydrauliksystem der Vorrichtung genutzt werden kann.

Das Raupenfahrwerk gewährleistet eine große Aufstandsfläche und eine hohe Standsicherheit der Vorrichtung. Dieses besteht vorteilhafterweise aus wenigstens zwei Laufwerken mit jeweils einer Raupenkette, die zwischen einem an einem vorderen Ende angeordneten Antriebsrad und einem an einem hinteren Ende angeordneten Führungsrad umgelenkt ist, wobei den Antriebsrädern jeweils ein Ölmotor beziehungsweise Elektromotor als Antrieb zugeordnet ist. Dem hinteren Ende mit dem Führungsrad ist zudem bevorzugt jeweils der Kippzylinder für den Kippmechanismus zugeordnet, so dass der Rahmen über das hintere Ende des Raupenfahrwerks überhängen kann und in Fahrtrichtung nach vorne kippbar ist.

Der Rahmen ist bevorzugt zwischen den Laufwerken des Raupenfahrwerks gehalten, so dass der oder die Kippzylinder seitlich an dem Rahmen angeordnet sind. Weiterhin weist der Rahmen mit Vorteil einen unteren Tragrahmen und einen oberen Gestellrahmen mit der Standplattform auf, wobei zumindest der Gestellrahmen mit wenigstens einem Hubmittel in der Höhe verstellbar ist. Über das Hubmittel ist die Standplattform zwischen einer abgesenkten Fahrposition und einer angehobenen Arbeitsposition in der Höhe verstellbar. Die Höhe der Arbeitsposition kann je nach Ausführung der Vorrichtung von dem Klauenpfleger individuell geregelt werden und ist damit optimal einstellbar. Dazu ist zumindest eines der Hubmittel ein zwischen Gestellrahmen und Tragrahmen angeordneter Hubzylinder, der auf dem Tragrahmen abgestützt ist. Mit dieser Konstruktion ist erreicht, dass vorteilhafterweise nur der Gestellrahmen mit der Standplattform angehoben wird, so dass die dafür benötigte Leistung aufgrund des geringeren Gewichts möglichst niedrig ist. Der Tragrahmen, auf dem der Gestellrahmen angeordnet ist, muss nicht mit angehoben werden und verbleibt mit dem Fahrwerk auf dem Boden. Rahmen beziehungsweise Gestellrahmen sind dabei derart aufgebaut, dass ein Tier über die Standplattform durch den Rahmen beziehungsweise Gestellrahmen hindurchgeführt werden kann, ohne wenden zu müssen. Die zum Anheben benötigten Hubmittel sind vorzugsweise in einem hinteren Bereich des Rahmens angeordnet, während der restliche Gestellrahmen mit Führungen zwischen Gestellrahmen und Tragrahmen gegen ein Kippen gesichert ist.

Um die Gliedmaßen eines zu behandelnden Tieres sicher zu fixieren, weist der Rahmen wenigstens eine Fixiereinrichtung für mindestens einen Gliedmaße eines zu behandelnden Tieres auf. Vorzugsweise sind für alle Gliedmaßen eines Tieres Fixiereinrichtungen vorzusehen. Eine entsprechende Fixiereinrichtung besteht beispielsweise aus einer Hebevorrichtung für eine Gliedmaße und einer Auflage für die Gliedmaße, wobei in einer bevorzugten Ausgestaltung zumindest zwei Fixiereinrichtungen seitlich an Stützen des Gestellrahmens angeordnete Bügel als Auflagen für vordere Gliedmaßen aufweisen. Eine zusätzliche Abstützung des Tieres kann über einen Bauchtragegurt erfolgen, der vorteilhafterweise beidseitig an wenigstens einer Kette eingehängt wird und in einer bevorzugten Ausführungsform über einen Hebemechanismus hydraulisch angezogen wird. Dieser Hebemechanismus weist dann bevorzugt 2 Zylinder und eine Hubstange auf.

In einer weiteren bevorzugten Ausführung weist die Standplattform zumindest abschnittsweise eine Gummibeschichtung auf und wenigstens ein Flächenabschnitt der Standplattform ist als Gitterrost ausgebildet. Der Gitterrost ist dabei vorzugsweise im Bereich der hinteren Gliedmaßen eines zu behandelnden Tieres vorzusehen, so dass Ausscheidungen der Tiere durch den Gitterrost hindurchfallen können. Mit der Gummibeschichtung ist gleichzeitig ein hohes Maß an Standsicherheit für die Tiere gewährleistet.

Nach einer anderen Weiterbildung ist vorgesehen, dass die Vorrichtung ein Stromaggregat für elektrische Verbraucher aufweist. Als mögliche elektrische Verbraucher sind hier vor allem das Hydrauliksystem, der Antrieb für das Fahrwerk, Hebevorrichtungen für die Gliedmaßen oder Schleifwerkzeuge für die Durchführung der Huf- und Klauenpflege zu nennen. Mit dem Stromaggregat können diese vorteilhaft ohne externe Energiequellen betrieben werden. Dieser Vorteil besteht insbesondere beim selbstfahrenden Transport der Vorrichtung, da nicht auf ein Kabel zur Energie- beziehungsweise Stromversorgung geachtet werden muss.

Wenigstens ein Teil der für den Betrieb erforderlichen Einrichtungen ist nach einer Weiterbildung innerhalb der Fahrbreite der Vorrichtung in der Höhe verschwenkbar am Rahmen angeordnet. Je nach Bedarf ist somit eine niedrigere Fahrhöhe realisiert, um beispielsweise durch Türen hindurchzufahren, und bei Behandlungen ein freier Durchgang der Tiere über die Standplattform gewährleistet. In der konkreten Ausgestaltung ist das Stromaggregat in einem Kasten verschwenkbar an vorderen Stützen des Gestellrahmens angeordnet.

Ein Ausführungsbeispiel der Erfindung, aus dem sich weitere erfinderische Merkmale ergeben, ist in der Zeichnung dargestellt. Es zeigen:
- Fig. 1:: eine Explosionsdarstellung der Wesentlichen Bauteile einer Vorrichtung in perspektivischer Ansicht;
- Fig. 2:: eine Seitenansicht der zusammengesetzten Vorrichtung aus Fig. 1 mit abgesenkten Gestellrahmen in Fahrposition;
- Fig. 3:: die Seitenansicht der Vorrichtung aus Fig. 2 mit angehobenen Gestellrahmen in Arbeitsposition;
- Fig. 4:: die Seitenansicht der Vorrichtung aus Fig. 2 und Fig. 3 mit gekipptem Rahmen; und
- Fig. 5:: eine perspektivische Ansicht einer Vorrichtung mit sämtlichen für die Durchführung der Huf- und Klauenpflege benötigten Einrichtungen in Arbeitsposition.

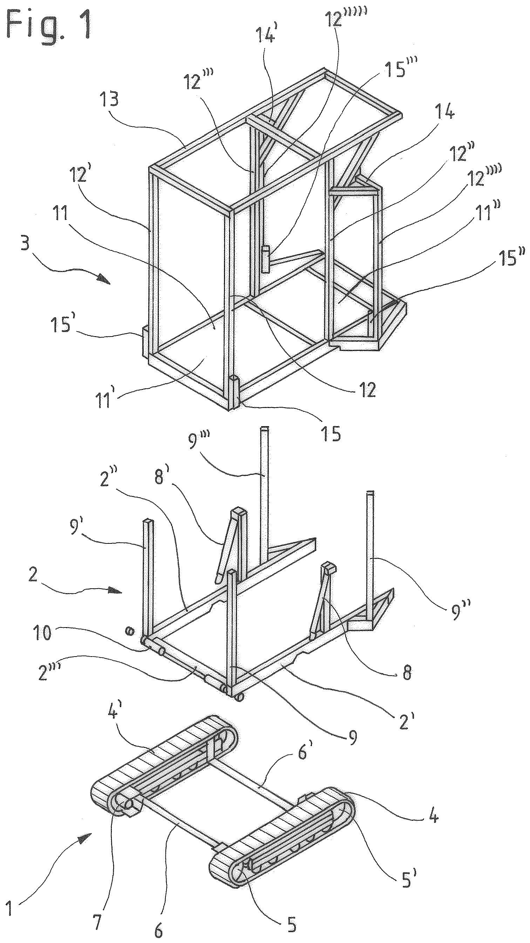

In Fig. 1 ist ein Fahrwerk 1 sowie ein zweiteiliger Rahmen 2, 3 aus einem Tragrahmen 2 und einem Gestellrahmen 3 dargestellt. Das Fahrwerk 1 besteht aus zwei Raupenlaufwerken 4, 4', die parallel und mit Abstand zueinander angeordnet sind. Jedes der Raupenlaufwerke 4, 4' weist ein vorderes Triebrad 5 und ein hinteres Führungsrad 5' auf, an denen das Raupenlaufwerk 4, 4' aufgespannt ist. Die Raupenlaufwerke 4, 4' sind über einen vorderen Querträger 6 und einen hinteren Querträger 6' miteinander verbunden. Der vordere Querträger 6 ist dabei nahe den Triebrädern 5 angeordnet, denen jeweils ein Ölmotor 7 zugeordnet ist.

Der Tragrahmen 2 ist U-förmig ausgebildet und weist zwei Schenkel 2', 2" mit je einem freien Ende und je einem an einem die Schenkel 2', 2" verbindenden Steg 2'" angesetzten Ende auf, denen jeweils ein Kippzylinder 8, 8' für einen Kippmechanismus zugeordnet ist. Der Tragrahmen 2 weist weiterhin vier senkrecht auf dem U-förmigen Abschnitt aufstehende Führungsstangen 9, 9', 9", 9'" auf. Jedem der Schenkel 2', 2" sind zwei der Führungsstangen 9, 9', 9", 9"' zugeordnet, wobei jeweils eine an dem freien und eine an dem mit dem Steg 2'" verbundenen Ende angeordnet ist. An dem Steg 2'" sind weiterhin Verbindungsmittel 10 für eine verschwenkbare Lagerung des Rahmens 2, 3 an dem Fahrwerk 1 vorgesehen.

Der Gestellrahmen 3 weist eine rechteckige Standplattform 11 mit einem eine Gummibeschichtung 11' aufweisenden vorderen Abschnitt und einem ein Gitterrost 11" aufweisenden hinteren Abschnitt auf. Dem Gestellrahmen sind weiter sechs senkrechte Stützen 12, 12', 12", 12"', 12"", 12""' zugeordnet. Vier der Stützen 12, 12', 12", 12"' stehen randseitig auf der Standplattform 11 auf, wobei zwei vordere Stützen 12, 12' gegenüberliegend an dem die Gummibeschichtung 11' aufweisenden vorderen Abschnitt und zwei hintere Stützen 12", 12''' im Bereich des das Gitterrost 11" aufweisenden Abschnitts angeordnet sind. Die Stützen 12, 12', 12", 12''' weisen eine einheitliche Höhe auf und tragen ein die Abmessungen der Standplattform 11 aufweisendes, wie die Standplattform 11 über die hinteren Stützen überhängendes Quer- und Längsrahmenteil 13. Die weiteren Stützen 12"", 12''''' sind kürzer als die anderen ausgeführt und an dem das Gitterrost 11' aufweisenden Abschnitt seitlich zu der Standplattform 11 ausgestellt. Zwischen den Stützen 12", 12'''' sowie den Stützen 12''',12''''' sind jeweils Verstrebungen 14 beziehungsweise 14' vorgesehen. An den Stützen 12, 12', 12"", 12''''' sind in einer Ebene mit der Standplattform 11 zudem Führungshülsen 15, 15', 15", 15''' für die Führungsstangen 9, 9', 9", 9''' angeordnet.

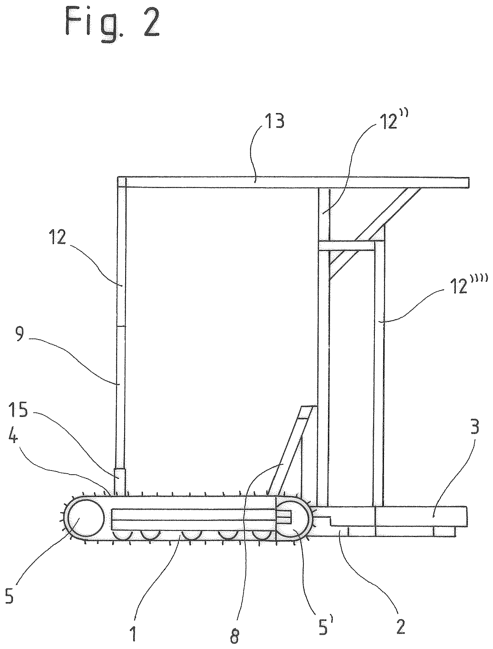

Die zusammengesetzte Vorrichtung ist in Fig. 2, Fig. 3 und Fig. 4 dargestellt. Dabei ist der Tragrahmen 2 mit den an dem Steg 2''' des U-förmigen Abschnitts angeordneten Verbindungsmitteln 10 an den vorderen Querträger 6 angelenkt. Ebenso sind die Kippzylinder 8, 8' an dem Fahrwerk 1 befestigt.

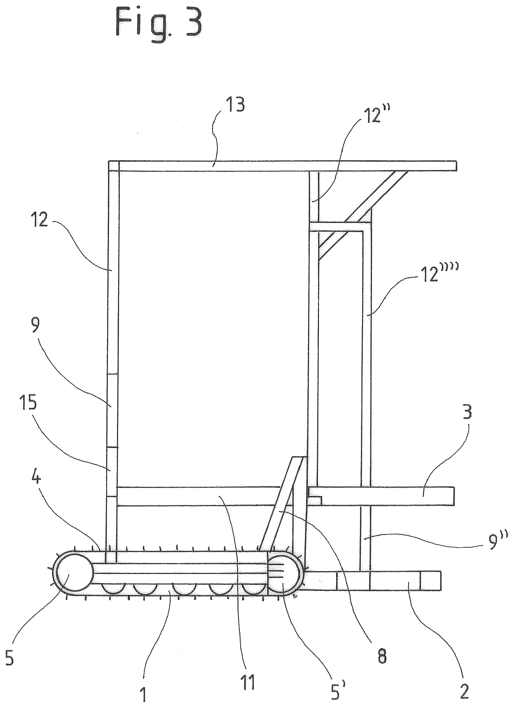

Die Führungshülsen 15, 15', 15", 15''' umgreifen dabei die Führungsstangen 9, 9', 9", 9''', so dass der Gestellrahmen 3 in der Höhe verschiebbar zu dem Tragrahmen 2 auf dem Tragrahmen 2 angeordnet ist. Um den Gestellrahmen 3 zwischen einer abgesenkten Fahrposition entsprechend Fig. 2 und einer angehobenen Arbeitsposition entsprechend Fig. 3 zu verstellen, sind zwischen den Verstrebungen 14, 14' der Stützen 12"", 12''''' und den Führungsstangen 9", 9''' Hubmittel angeordnet.

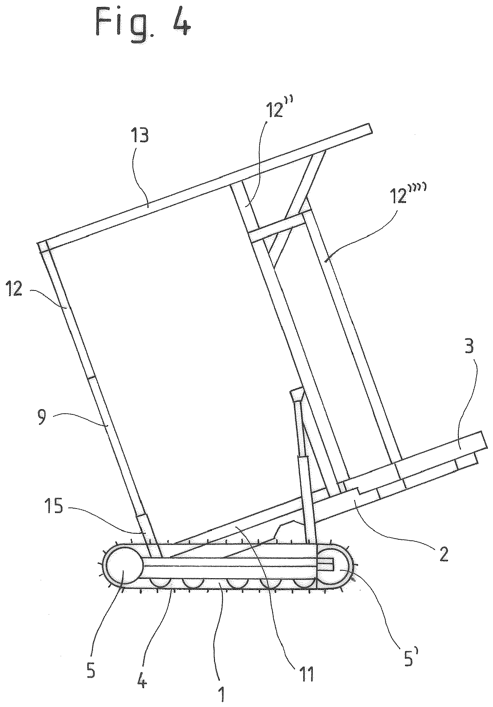

In Fig. 4 ist der gesamte Rahmen 2, 3 aus Tragrahmen 2 und Gestellrahmen 3 mit den Kippzylindern 8, 8' gekippt dargestellt, wobei eine Verschwenkung des Rahmens 2, 3 um den vorderen Querträger 6 des Fahrwerks 1 erfolgte.

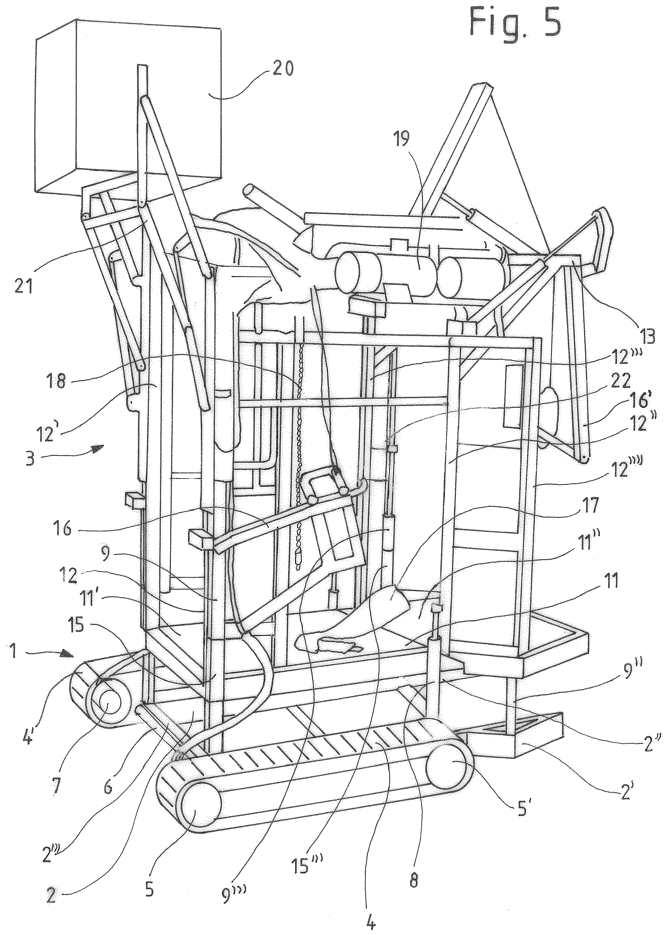

Fig. 5 zeigt schließlich eine vollständig ausgerüstete Vorrichtung in Arbeitsposition mit Fixiereinrichtungen 16, 16' für vordere beziehungsweise hintere Gliedmaßen eines zu behandelnden Tieres und einem Bauchtragegurt 17 zum Abstützen der Tiere, der in Ketten 18 einhängbar ist, die über eine Hubstange einem Hebemechanismus zugeordnet und hydraulisch anhebbar sind. Weiter ist ein an dem Quer- und Längsrahmenteil 13 angeordneter Antrieb 19 für ein Hydrauliksystem sowie eine verschwenkbare Anordnung eines Kastens 20 zu entnehmen. In dem Kasten 20 ist ein Stromaggregat zur Energieversorgung angeordnet. Die Befestigung des Kastens 20 erfolgt über eine verschwenkbare Halterung 21, die an den Stützen 12, 12' angeordnet ist. An der Stütze 12''''' beziehungsweise auf der Führungsstange 9''' ist zudem einer der als Hubmittel eingesetzten Hubzylinder 22 zum Anheben des Gestellrahmens 3 zu erkennen.

## Patentansprüche

1. Vorrichtung zur Durchführung der Huf- und Klauenpflege bei Tieren mit einem Fahrwerk (1) und einem auf dem Fahrwerk (1) angeordneten Rahmen (2, 3), der zumindest eine Standplattform (11) für ein zu behandelndes Tier aufweist, wobei das Fahrwerk (1) und der Rahmen (2, 3) über einen Kippmechanismus miteinander verbunden sind,
**dadurch gekennzeichnet,**
**dass** der Rahmen (2, 3) in Fahrtrichtung nach hinten oder nach vorne kippbar ist, indem der Rahmen (2, 3) einseitig in einem vorderen oder einem hinteren Bereich anhebbar ist,
**dass** das Fahrwerk (1) als ein Raupenfahrwerk ausgebildet ist,
**dass** der Rahmen (2, 3) einseitig mit dem anhebbaren Bereich über das Fahrwerk (1) hinaus überhängt, und
**dass** der angehobene Rahmen eine mindestens benötigte Bodenfreiheit aufweist, so dass ein sicheres Überqueren von zum Beispiel Türschwellen oder dergleichen ermöglicht ist.

2. Vorrichtung nach Anspruch 1, **dadurch gekennzeichnet, dass** der Kippmechanismus mindestens einen Kippzylinder (8, 8') aufweist.

3. Vorrichtung nach einem der Ansprüche 1 oder 2, **dadurch gekennzeichnet, dass** der Kippmechanismus eine hydraulische Betätigung aufweist.

4. Vorrichtung nach einem der Ansprüche 1 bis 3, **dadurch gekennzeichnet, dass** der Rahmen (2, 3) einen unteren Tragrahmen (2) und einen oberen Gestellrahmen (3) mit der Standplattform (11) aufweist, wobei zumindest der Gestellrahmen (3) mit wenigstens einem Hubmittel in der Höhe verstellbar ist.

5. Vorrichtung nach Anspruch 4, **dadurch gekennzeichnet, dass** zumindest eines der Hubmittel ein zwischen Gestellrahmen (3) und Tragrahmen (2) angeordneter Hubzylinder (22) ist, der auf dem Tragrahmen (2) abgestützt ist.

6. Vorrichtung nach einem der Ansprüche 1 bis 5, **dadurch gekennzeichnet, dass** der Rahmen (2, 3) wenigstens eine Fixiereinrichtung (16, 16') für mindestens eine Gliedmaße eines zu behandelndes Tieres aufweist.

7. Vorrichtung nach einem der Ansprüche 1 bis 6, **dadurch gekennzeichnet, dass** die Standplattform (11) zumindest abschnittsweise eine Gummibeschichtung (11') aufweist und wenigstens ein Flächenabschnitt als Gitterrost (11") ausgebildet ist.

8. Vorrichtung nach einem der Ansprüche 1 bis 7, **dadurch gekennzeichnet, dass** diese ein Stromaggregat für elektrische Verbraucher aufweist.

9. Vorrichtung nach einem der Ansprüche 1 bis 8, **dadurch gekennzeichnet, dass** wenigstens ein Teil der für einen Betrieb erforderlichen Einrichtungen innerhalb der Fahrbreite der Vorrichtung in der Höhe verschwenkbar am Rahmen (2, 3) angeordnet sind.

## Claims

1. A device for carrying out hoof and paw care in animals, with a chassis (1) and a frame (2, 3), which is disposed on the chassis (1) and has at least one standing platform (11) for an animal to be treated, wherein the chassis (1) and the frame (2, 3) are connected with one another over a tilting mechanism,
**characterized in**
**that** the frame (2, 3) can be tilted backwards or forwards in the direction of travel, in that the frame (2, 3) can be lifted at one side in a front or a rear region,
**that** the chassis (1) is designed as a crawler chassis,
**that** the frame (2, 3) overhangs on one side with the liftable area beyond the chassis (1), and
**that** the lifted frame has at least the minimum ground clearance required, so that a secure crossing of, for example, door thresholds or the like is possible.

2. The device according to claim 1, **characterized in that** the tilting mechanism has at least one tilting cylinder (8, 8').

3. Device according to one of the claims 1 or 2, **characterized in that** the tilting mechanism has a hydraulic actuation.

4. The device according to one of the claims 1 to 3, **characterized in that** the frame (2, 3) has a lower supporting frame (2) and an upper rack frame (3) with the standing platform (11), wherein at least the rack frame (3) is adjustable in height by at least one lifting means.

5. The device according to claim 4, **characterized in that** at least one of the lifting means is a lifting cylinder (22), which is disposed between the rack frame (3) and the supporting frame (2) and supported on the supporting frame (2).

6. The device according to one of the claims 1 to 5, **characterized in that** the frame (2, 3) has at least one fixing device (16, 16') for at least one limb of an animal to be treated.

7. The device according to one of the claims 1 to 6, **characterized in that** the standing platform (11) has a rubber coating (11') at least in sections and at least one flat section is designed as a grating (11").

8. The device according to one of the claims 1 to 7, **characterized in that** the latter has an electric generator for electrical loads.

9. The device according to one of the claims 1 to 8, **characterized in that** at least a part of the equipment, required for the operation, is disposed within the drive width of the device, so as to be pivotable in height on the frame (2, 3).

## Revendications

1. Dispositif pour le traitement des sabots et des onglons chez des animaux, comprenant un châssis (1) et un cadre (2, 3) disposé sur le châssis (1), qui présente au moins une plate-forme de positionnement (11) pour un animal à traiter, dans lequel le châssis (1) et le cadre (2, 3) sont reliés entre eux par un mécanisme de bascule,
**caractérisé en ce que**
le cadre (2, 3) peut basculer vers l'arrière ou vers l'avant dans le sens de la marche, **en ce que** le cadre (2, 3) peut être soulevé dans une partie avant ou arrière unilatéralement,
que le châssis (1) est conçu en tant qu'un châssis chenillé,
que le cadre (2, 3) est unilatéralement en porte-à-faux au-delà du châssis (1) avec la partie pouvant être soulevée, et
que le cadre soulevé présente une garde au sol au moins nécessaire pour permettre de franchir de manière sûre des seuils de porte ou similaire par exemple.

2. Dispositif selon la revendication 1, **caractérisé en ce que** le mécanisme de bascule présente au moins un vérin de bascule (8, 8').

3. Dispositif selon la revendication 1 ou 2, **caractérisé en ce que** le mécanisme de bascule présente un actionnement hydraulique.

4. Dispositif selon l'une des revendications 1 à 3, **caractérisé en ce que** le cadre (2, 3) présente un cadre porteur inférieur (2) et un cadre-bâti supérieur (3) avec la plate-forme de positionnement (11), dans lequel au moins le cadre-bâti (3) peut être réglé en hauteur par au moins un moyen de levage.

5. Dispositif selon la revendication 4, **caractérisé en ce qu'**au moins un des moyens de levage est un vérin de levage (22) disposé entre le cadre-bâti (3) et le cadre porteur (2), qui est appuyé sur le cadre porteur (2).

6. Dispositif selon l'une des revendications 1 à 5, **caractérisé en ce que** le cadre (2, 3) présente au moins un dispositif de fixation (16, 16') pour au moins un membre de l'animal à traiter.

7. Dispositif selon l'une des revendications 1 à 6, **caractérisé en ce que** la plate-forme de positionnement (11) présente un revêtement caoutchouc (11') au moins par tronçons et au moins un tronçon plat est conçu en tant que caillebotis (11'').

8. Dispositif selon l'une des revendications 1 à 7, **caractérisé en ce que** celui-ci présente un groupe électrogène pour des consommateurs électriques.

9. Dispositif selon l'une des revendications 1 à 8, **caractérisé en ce qu'**au moins une partie des équipements nécessaires pour un fonctionnement sont disposés en pouvant basculer en hauteur sur le cadre (2, 3), dans l'empattement du dispositif.
